# EUROPEAN PATENT APPLICATION

(11) **EP 2 540 421 A1**
(43) Date of publication of application: **02.01.2013**
(21) Application number: 11747380.1
(22) Date of filing: 23.02.2011
(51) Int. Cl.: B23B 27/14, B23C 5/20

(54) **CUTTING TOOL**

(30) Priority: 24.02.2010 JP 2010038943
(71) Applicant: Kyocera Corporation, Kyoto-shi, Kyoto 612-8501 (JP)
(72) Inventor: FUKANO,Tsuyoshi, Satsumasendai-shi Kagoshima 895-0292 (JP); TANIBUCHI,Takahito, Satsumasendai-shi Kagoshima 895-0292 (JP); RI,Kou, Satsumasendai-shi Kagoshima 895-0292 (JP); KUBO,Hayato, Satsumasendai-shi Kagoshima 895-0292 (JP); YAMASAKI,Tsuyoshi, Satsumasendai-shi Kagoshima 895-0292 (JP)
(74) Representative: Viering, Jentschura & Partner
(86) International application number: PCT/JP2011/053960
(87) International publication number: WO 2011/105420

(57) **Abstract**

Provided is a cutting tool such that the progress of wear is delayed and that wear resistance is excellent. This cutting tool is configured in such a way that multiple cover layers (7, 8, 9, 10, 11, 12, 14) are formed on the surface of a substrate (6); that the outermost layer (14), which is one of the cover layers, comprises a Ti(CₓN_{y}O_{z})ₐ(x + y + z = 1,0 ≤ x ≤ 0.6, 0 ≤ y 0 ≤ 0.6, 0.2 ≤ z ≤ 0.8, 1.0 ≤ a ≤ 1.7) layer; and that the thickness of that portion of the outermost layer (14) which is located in the center section (3a) of a flank surface is smaller than the surface roughness (Ra) of the outermost layer (14). The outermost layer (14) comes into contact with an article to be cut, leading to a coating being generated, with the result that the progress of wear is restricted.

## Description

### TECHNICAL FIELD

The present invention relates to a cutting tool that, when machining gray cast iron, for example, exhibits good wear resistance.

### BACKGROUND ART

Coated cemented carbides, in which one or more coating layers are formed on the surface of a substrate made of cemented carbide, cermet or the like, thereby improving wear resistance, sliding characteristics and chipping resistance, are widely used in cutting tools.

For example, Patent Reference 1 discloses a cutting tool on which a hard coated layer is formed by deposition, on the surface of an cemented carbide substrate, an underlayer of TiN or TiCN and overlayer of a Al₂O₃ layer having a thickness of 3 to 30 µm, after which an outermost base layer of a TiOᵥ of 0.1 to 3 µm and a TiCNO (where O is oxygen that diffused from the outermost base layer) layer of 0.05 to 2 µm are sequentially laminated, and states that affinity with respect to chips of a work that exhibits a high gumminess, such as stainless steel or soft steel, is low, and deposit resistance is good.

In Patent Reference 2 and Patent Reference 3, there is disclosure of a method of depositing a coated layer similar to the above, after which the surface of the coated layer is polished to make the surface of the coated layer smooth.

Additionally, in Patent Reference 4, there is disclosure of using a coating tool having a coated layer such as a TiBON layer, and by supplying a gas having a high oxygen concentration to the part being cut, so as to cause the generation of an oxide such as a being between the cutting edge of the tool and the work, the generated oxide acting as a protective film, thereby enabling a reduction in tool wear.

### PRIOR ART REFERENCES

### PATENT REFERENCES

Patent Reference 1: Japanese Patent Application Publication No. 2001-071203
Patent Reference 2: Japanese Patent Application Publication No. 2008-055581
Patent Reference 3: Japanese Patent Application Publication No. 2006-297585
Patent Reference 4: Japanese Patent Application Publication No. 2004-276228

### SUMMARY OF THE INVENTION

### PROBLEM TO BE SOLVED BY THE INVENTION

With the constitution in Patent Reference 1, however, although there is an improvement in the resistance to deposition of cutting chips at the rake face, it is not possible to suppress the progression of wear at the flank face, and in the case of cutting work made of gray cast iron, there is a problem of breakage of the lowermost underlayer of the TiOᵥ layer and the TiCNO layer caused by shock.

Also, with a method such as in Patent Preferences 2 and 3, in which the surface of the coated layer is polished after formation thereof, there is a problem, which is caused by polishing, of wear of the surface layers of the TiOₓ layer and the TiCNO layer and the like that existed at the surface of the coated layer, thereby losing the effectiveness of the surface layer.

Additionally, with a method of cutting while blowing a gas having a high oxygen concentration, such as in Patent Reference 4, although it is possible to promote the generation of an oxide on the surface of the coated layer, the inner part of the coated layer is also oxidized, leading to progress of oxidation wear, so that this does not necessarily improve the wear resistance of the coated layer.

The present invention has an object to provide a cutting tool that achieves good wear resistance, for example, in cutting work made of gray cast iron. Means for Solving the Problem

A cutting tool according to the present invention has multiple coated layers formed on a surface of a substrate. An outermost layer of the coated layers are made of a Ti(CₓN_{y}O_{z})ₐ (x+y+z=1, 0 ≦ x ≦ 0.6, 0 ≦ y ≦ 0.6, 0.2 ≦ z ≦ 0.8, 1.0 ≦ a ≦ 1.7) layer. The thickness of the outermost layer in the center part of the flank face is smaller than the surface roughness (Ra) of the outermost layer.

In the case of the above-noted constitution, it is preferable that the thickness of the outermost layer in the center part of the flank face be 0.01 to 0.1 µm, and the surface roughness (Ra) be 0.1 to 0.5 µm.

It is also preferable that the surface roughness (Ra) of the outermost layer in the center part of the flank face be coarser than the surface roughness (Ra) of the outermost layer of the rake face.

Additionally, the thickness of the outermost layer at the cutting edge tip may be thinner than the thickness of the outermost layer in the center part of the flank face, or the outermost layer may not exist at the cutting edge tip.

A preferred constitution of the above-noted cutting tool is a negative type in which the coated layers are formed on the surface of the cemented carbide substrate. The coated layers has a total thickness of 9 to 25 µm, and include, from the substrate side, a TiCN layer, an Al₂O₃ layer, and a surface layer of Ti(CₓN_{y}O_{z})a (x+y+z=1, 0 ≦ x ≦ 0.6, 0 ≦ y ≦ 0.6, 0.2 ≦ z ≦ 0.8, 1.0 ≦ a ≦ 1.7). Cutting edges formed at the edges formed by intersections of the upper surface and the side surface are a plurality of sets. Each set includes a main cutting edge, a sub-cutting edge, and a flat cutting edge. Land parts are formed at positions on the rake face that leads to the above-noted cutting edges. The sub-cutting edge land part that follows the sub-cutting edge is inclined so as to approach the lower surface as moving toward the center part of the upper surface.

The cutting edges may be honed to 0.05 to 0.09 mm, as seen from the rake face side.

The honing may become smaller in the sequence of a main cutting edge, a sub-cutting edge, and a flat cutting edge.

Additionally, the main cutting edge land part may be incline so as to approach the lower surface moving toward the center part of the upper surface thereof, and the angle of inclination of the sub-cutting edge land part may be larger than the angle of inclination of a main cutting edge land part corresponding to the main cutting edge.

The angular difference between the angle of inclination of the main cutting edge land part and the angle of inclination of the sub-cutting edge land part may be 3 to 10°.

Additionally, the flat cutting edge may be formed to protrude more than the main cutting edge, and the sub-cutting edge may be inclined so as to approach the lower surface moving from the flat cutting edge toward the main cutting edge.

Also, the cutting tool may include a curved first corner cutting edge between the main cutting edge and the sub-cutting edge, and a curved second corner cutting edge between the sub-cutting edge and the flat cutting edge.

Additionally, when seen in plan view, a radius of curvature of the first corner cutting edge may be larger than the radius of curvature of the second corner cutting edge.

### EFFECT OF THE INVENTION

Because the cutting tool according to the present invention includes a Ti(CₓN_{y}O_{z})ₐ (x+y+z=1, 0 ≦ x ≦ 0.6, 0 ≦ y ≦ 0.6, 0.2 ≦ z ≦ 0.8, 1.0 ≦ a ≦ 1.7) layer, which is the outermost layer of the coated layer, that is made very thin on a surface having surface unevenness, the outermost layer is not easily worn out or peeled, and exists stably. Additionally, the Ti(CₓN_{y}O_{z})ₐ (x+y+z=1, 0 ≦ x ≦ 0.6, 0 ≦ y ≦ 0.6, 0.2 ≦ 0.8, 1.0 ≦ a ≦ 1.7) layer promotes the generation of a belag by the oxidation of Si, Mn, Al, Cr, and Mo or the like, which are constituent elements of gray cast iron, this belag (oxide protective layer) protecting the coated layer and achieving the effect of improving the wear resistance, thereby improving the wear resistance in cutting work made of gray cast iron by the existence of the outermost layer.

### BRIEF DESCRIPTION OF DRAWINGS

FIG. 1 (a) is a schematic perspective view and FIG. 1(b) is an enlarged partial cross-sectional view of an example of an insert, which is a first preferred embodiment of a cutting tool according to the present invention.
FIG. 2 is a photograph showing the wear conditions in the nose cutting edge region in cutting work on gray cast iron using a cutting tool according to the present invention.
FIG. 3 is an overall oblique view showing an insert according to a second preferred embodiment of the present invention.
FIG. 4(a) is an upper-surface view of the insert shown in FIG. 3, and FIG. 4(b) is a side view thereof.
FIG. 5 is an enlarged partial view of the insert shown in FIG. 4(a).
FIG. 6(a) is a schematic cross-sectional view along the line A-A in FIG. 5, and FIG. 6(b) is a schematic cross-sectional view along the line B-B in FIG. 5.
FIG. 7 is a side view showing a cutting tool in which one of inserts shown in FIG. 3 to FIG. 7 is attached to a holder.
FIG. 8 is an enlarged partial view of the cutting tool shown in FIG. 7.

### EMBODIMENTS FOR CARRYING OUT THE INVENTION

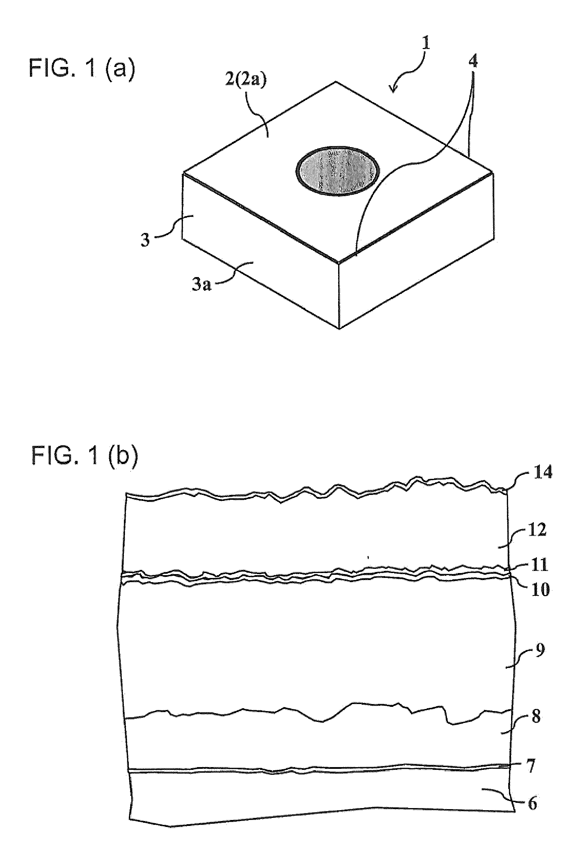

An insert that is a first preferred embodiment of a cutting tool according to the present invention will be described below, based on the schematic perspective view and enlarged partial cross-sectional view of FIG. 1.

In the insert 1 of FIG. 1, the intersecting edges of the rake face 2 and the flank face 3 constitute the cutting edges 4, and also a coated layer, which is subsequently laminated by: at least one layer of a carbide, a nitride, a carbonitride, an oxycarbide, a nitrogen oxide, and a carboxynitride of Ti; an Al₂O₃ layer 12 having an α-type crystalline structure (hereinafter referred to simply as an Al₂O₃ layer); and an outermost layer 14 constituted by a Ti(CₓN_{y}O_{z})ₐ (x+y+z=1, 0 ≦ x ≦ 0.6, 0 ≦ y ≦ 0.6, 0.2 ≦ z ≦ 0.8, 1.0 ≦ a ≦ 1.7) layer, is formed on a surface of a substrate 6. The insert 1 of FIG. 1 is a planar and comprises a main surface having a substantially square shape (CNMA/CNMG).

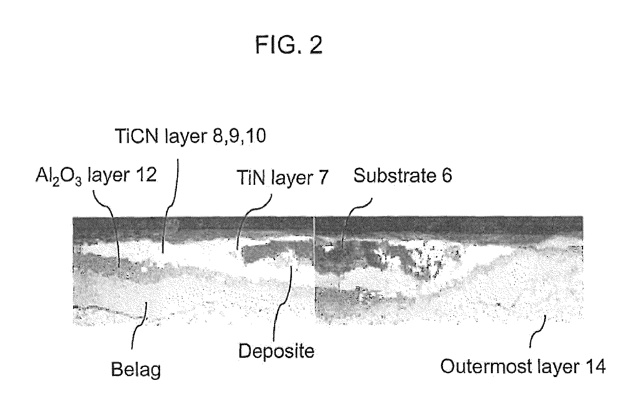

The thickness of the outermost layer 14 at the flank face center part 3a is smaller than the surface roughness (Ra). By this constitution, because TiCNO layer or TICS layer that is the outermost layer 14 is formed very thinly on a surface with surface unevenness, the outermost layer 14 is not easily worn away or peeled, and exists stably, and, as shown in FIG. 2, the generation of a belag by the oxidation of Si, Mn, Al, Cr, and Mo or the like, which are constituent elements of gray cast iron, is promoted, thereby enabling improvement of the wear resistance in cutting work on gray cast iron. The effect of generating a coating is particular great at the stage of severe removal of the outermost layer 14 by the material being cut before removal of the outermost layer 14 by cutting. Also, although the outermost layer 14 wears when cutting and is in a condition in which it does not exist as a continuous coated layer, there continues to be an improvement in the cutting performance by the effect of generating a belag in the part in which the outermost layer remains.

From the standpoint of increasing the wear resistance and the chipping resistance of the outermost layer 14, it is preferable that the thickness of the outermost layer 14 at the flank face center part 3a be 0.01 to 0.1 µm and that the surface roughness (Ra) thereat be 0.1 to 0.5 µm. It is also preferable that the thickness/surface roughness (Ra) ratio of the outermost layer 14 at the flank face center part 3a be 0.2 to 0.3, from the standpoint of improving the wear resistance by the effect of generating a belag.

That the surface roughness (Ra) of the outermost layer 14 at the flank face center part 3a be coarser than the surface roughness (Ra) of the outermost layer 14 at the rake face top surface (outermost surface) part 2a is preferable from the standpoint of improving the cutting chip ejection at the flat surface 2, and also the standpoint of promoting generation of a belag on the flank face 3. At the rake face 2, even if the surface roughness is small, contact with the cutting chips causes a condition in which it is easy for a belag to be generated.

Additionally, the thickness of the outermost layer 14 at the cutting edge 4 can be made to either be thinner than the thickness of the outermost layer 14 at the flank face center part 3a or the outermost layer 14 may not exist at the cutting edge 4, and if this constitution is adopted, in non-continuous cutting in which shock of cutting or the like is imparted to the sprue gate, which is characteristic of machining cast iron, it is possible to reduce the frequency of film breakage caused by the outermost layer 14 in the region of the cutting edge 4, which is the honed part, or of the land part.

Because the Ti(CₓN_{y}O_{z}) (x+y+z=1, 0 ≦ x ≦0.6, 0 ≦ y ≦ 0.6, 0.2 ≦ z ≦ 0.8, 1.0 ≦ a ≦ 1.7) layer exhibits a color from white-purple to gray-purple, the surface of the insert 1 is colored, when using the insert 1 it is easy to distinguish whether the outermost layer 14 has worn and is already used, and it is easy to verify the progress of wear.

Next, the Al₂O₃ layer 12 formed on the lower (substrate 6) side of the outermost layer 14 will be described. It is preferable from the standpoint of wear resistance that the crystals constituting the Al₂O₃ of the Al₂O₃ layer 12 have an α -type crystal structure, and also that the average crystal width viewed from a direction perpendicular to the surface of the substrate 6 be 0.05 to 0.7 µm.

The coated layers formed on the substrate side 6 of the Al₂O₃ layer 12 is preferably one or more layers selected from the group of TiC, TiN, TiCN, TiCNO, TiCO, and TiNO, improving wear resistance and chipping resistance. According to the present embodiment, a specific constitution is one in which a TiN layer 7 is formed as a first layer directly above the substrate 6, and then TiCN layers 8 to 10 are formed as the second layers. As the TiCN layers 8-10, it is preferable to use the sequential lamination of so-called MT-TiCN layers 8 and 9, made of columnar crystals grown at a relative low coating temperature of 780 to 900°C and using acetonitrile (CH₃CN) gas as a raw material, and a so-called HT-TiCN layer 10 grown at a high coating temperature of 950 to 1100°C. Additional, it is preferable that the MT-TiCN layers 8 and 9 be constituted of the lamination of a fine MT-TiCN layer 8 made of fine columnar crystals having an average crystal with of smaller than 0.5 µm, and a coarse MT-TiCN layer 9 made of relatively coarse columnar crystals having an average crystal width of 0.5 to 2.0 µm. Because of this, adhesion to the Al₂O₃ layer is improved, and it is possible to suppress peeling and chipping of a coated layer.

It is preferable that the upper part or all of the HT-TiCN layer 10 be oxidized in the coating process and change to a TiCNO layer having Ti atoms of 40 to 55 atm%, oxygen (O) of 15 to 25 atm%, and carbon (C) of 25 to 40 atm%, with the remaining part being nitrogen (N), forming an intermediate layer 11 having a thickness of 0.05 to 0.5 µm. Because of this, it is easy to fabricate an α-type Al₂O₃ layer 12 made of Al₂O₃ having an α-type crystal structure with an average grain diameter of 0.05 to 0.7 µm.

The thicknesses of each layer and the properties of the crystals constituting each layer can be measured by observing the cross-section of the insert 1 using electron microscope photographs (scanning electron microscope (SEM) photographs or transmission electron microscope (TEM) photographs).

For the substrate 6 of the insert 1, it is preferable to use a cemented carbide in which a hard phase, which is made of tungsten carbide (WC) and at least one, if desired, selected from a group of carbide, a nitride, and a carbonitride of the periodic table Group 4, 5, or 6 metal, is bonded by a bonded phase made by iron-group metal such as cobalt (Co) or nickel (Ni), or a Ti substrate cermet, or a ceramic such as Si₃N₄, Al₂O₃, diamond, or cubic boron nitride (cBN). Of these, in the case of using the insert 1 as a cutting tool, it is preferable from the standpoint of chipping resistance and wear resistance that the substrate 6 may be made of cemented carbide or cermet. Also, depending upon the application, the substrate 6 may be made of a metal such as a carbon steel, a high-speed steel or an alloy steel.

### (Second Embodiment)

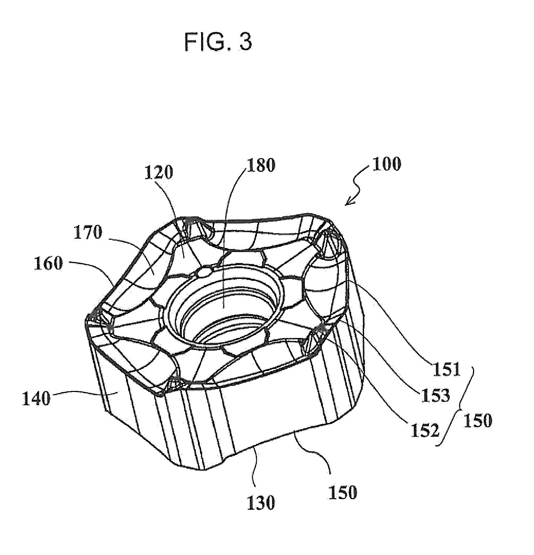

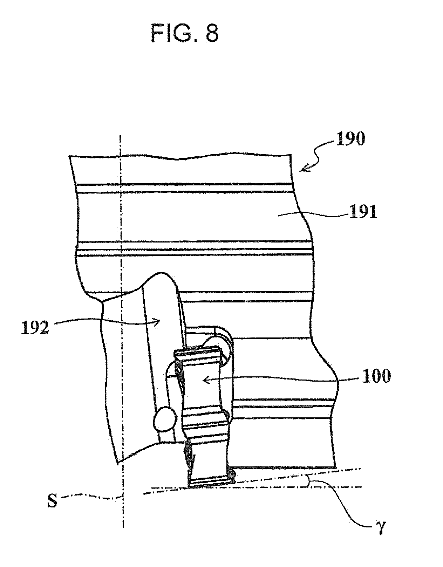

With regard to the second preferable embodiment of a cutting tool according to the present invention, the insert shown in FlGs. 3 to 7 and the cutting tool, in which the insert is mounted to a holder, as shown in FIG. 8 and FIG. 9, will be described in detail, with references made to the simplified drawings thereof. As shown in FIG. 3, the insert 100 has a body part with a substantially flat polygonal shape.

The body part includes a rake face 120 at the upper-surface thereof, a seating surface 130 at the lower-surface thereof, and a flank face 140 at the side-surface thereof. A cutting edge 150 is formed at the intersection part between the rake face 120 and the flank face 140. At the center of the body part, a mounting screw contact part 180 that passes through the body part from the rake face 120 toward the seating surface 130 is formed.

The insert 100 is a negative-type insert in which both the rake face 120 and the seating surface 130 can be used as rake faces and although there is basically 90° angles between the flank face 140 and the rake face 120 and between the flank face 140 and seating surface 130, the flank face 140 may have a relief angle imparted thereto, so that the angles between the flank face and the rake face 120 and between the flank face and seating surface 130 is less than 90°, with the flank face 140 being a concavely curved surface.

The shape of the body part, when seen in plan view, can be, for example, a shape such as triangular, square, pentagonal, hexagonal, octagonal, which a person skilled in the art would usually use for an insert, and with an increase in the number of corners, there is an increase in the number of cutting edges that can be used, and an increase in the contact seating surface area, and an improvement in the binding force of the insert 100. On the other hand, because of an increase in the number of corners reduces the length of one side, a small-diameter insert cannot accommodate a large cutting depth, it is necessary to adjust to achieve a balance. In the present embodiment, a substantially pentagonal shape with five long sides is used. That is, the insert 100 is an insert with 10 usable corners.

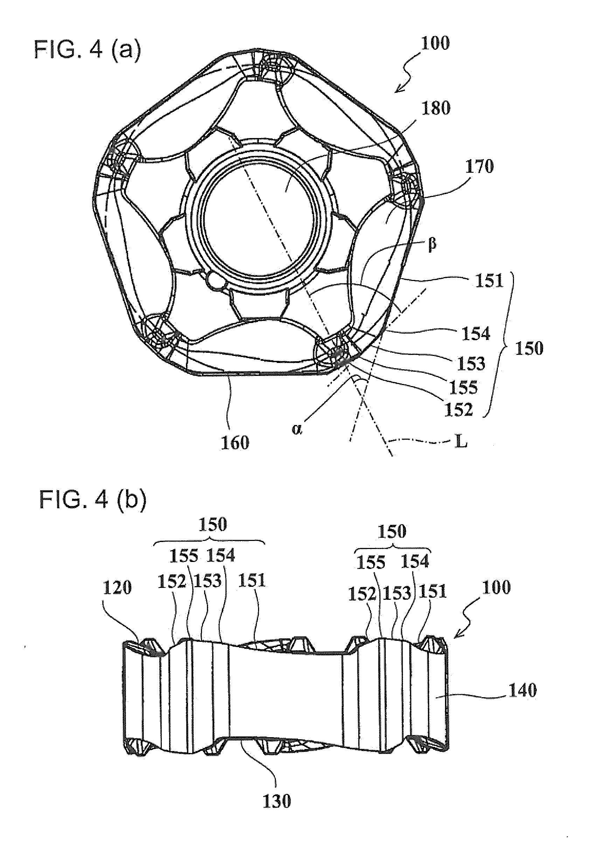

The cutting edge 150 includes a main cutting edge 151, a flat cutting edge 152, and a sub-cutting edge 153 disposed between the main cutting edge 151 and the flat cutting edge 152. Additionally, in the present embodiment, as shown in FIG. 4(a), a first corner cutting edge 154 is formed between the main cutting edge 151 and the sub-cutting edge 153, and a second corner cutting edge 155 is formed between the sub-cutting edge 153 and the flat cutting edge 152.

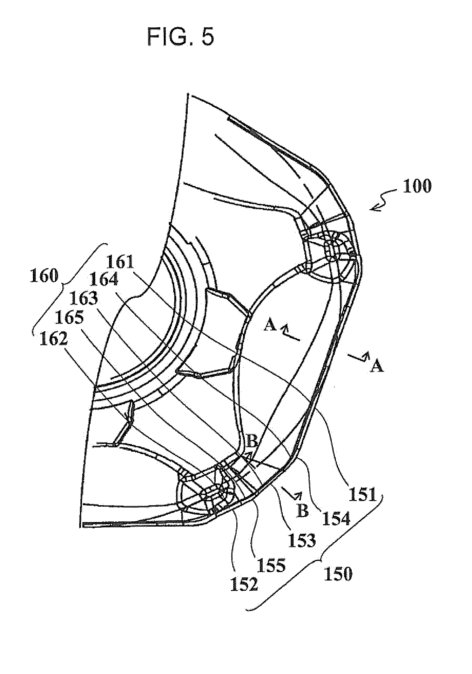

The main cutting edge 151 is an edge that, when cutting, plays the role of coming into contact first with the work and generating cutting chips, and this is the part that collides with the casting surface existing on the surface of gray cast iron when it is cut. The main cutting edge 151 is constituted so as to be the longest of the cutting edges 150 (151 to 155), and can linearly shaped, as shown in FIG. 3 and in plan view as in FIG. 4(a) of the present embodiment, and may also be curved (arc-shaped). Also, the main cutting edge 151, as shown in the side view of FIG. 4(b), is inclined so as to approach the seating surface 130 with increasing distance from a neighboring sub-cutting edge 153, so that there is an axial rake with respect to the center axis of rotation of the holder when mounted in the holder. Also, the main cutting edge 151 is formed so as to be concave toward the seating surface 130 as shown in the side view of FIG. 4(b), and if a straight line is drawn connecting both ends thereof, the straight line is inclined so that, as moving from the side that makes contact with the sub-cutting edge 153 toward the side of the end making contact with the flat cutting edge 152, it is inclined toward the seating surface 130, From the standpoint of reducing the cutting resistance, a nick (groove part) that divides the main cutting edge 151 may be provided midway in the main cutting edge 151. Additionally, as shown in FIG. 5 or the like, a breaker groove 170 positioned opposite the main cutting edge 151 may be formed in on the rake face 120.

The flat cutting edge 152 is formed for the main purpose of improving the finished surface roughness of the work being cut. The flat cutting edge 152 is, as shown in plane views of FIG. 3 and FIG. 4(a), a straight line when seen in plan view and is, as shown in the side view of FIG. 4B, inclined upward as it approaches the sub-cutting edge 153 (the side opposite from the seating surface side).

The sub-cutting edge 153 is a cutting edge having an outer peripheral cutting edge corner that is larger than that of the main cutting edge 151, and being disposed for the purpose of aiding the cutting by the main cutting edge 151 by, for example, reducing the cutting resistance of the main cutting edge 151, suppressing breakage of the main cutting edge 151, or the like. The sub-cutting edge 153, as shown in the side view of FIG. 4(b), is preferably inclined downward moving away from the flat cutting edge 152 toward the main cutting edge 151, and by doing so, the sub-cutting edge 153 has a positive axial rake when the insert 100 is mounted to a holder. The sub-cutting edge 153 is also positioned between the main cutting edge 151 and the flat cutting edge 152, and a plurality of sub-cutting edges may be provided.

As shown in plan view in FIG. 4(a), the outer peripheral cutting edge angles represent the angles made by each cutting edge with a line L that is parallel to the center axis of rotation of a holder 191 of the main cutting edge 151, the outer peripheral cutting edge angle α of the main cutting edge 151 being 0° to 60°, and the outer peripheral cutting edge angle β of the sub-cutting edge 153 being 60° to 80°. The "outer peripheral cutting edge angle" is the angle of inclination of a cutting edge with respect to the center axis of rotation S of the holder 191 when the insert 100 is mounted to the holder 191. In consideration of damage and chipping of the cutting edge 150, it is preferable that the outer peripheral cutting edge angle β of the sub-cutting edge 153 be set to be, for example, at least two times the outer peripheral cutting edge angle α of the main cutting edge 151.

The proportion of the lengths of the main cutting edge 151 to the sub-cutting edge 153 is set to be, for example, 2:1 to 10: 1, and preferably is set to be 2: 1 to 6:1. The proportion of the lengths of the flat cutting edge 152 to the sub-cutting edge 153 is preferably set to be 1:1 to 6:1.

The first corner cutting edge 154 and the second corner cutting edge 155, when seen in plan view, are both curved lines, the radius of curvature of the first corner cutting edge 154 being formed so as to be larger than the radius of curvature of the second corner cutting edge 155. By doing this, large variations in the thickness of cutting chips generated from each of the main cutting edge 151 and the sub-cutting edge 153 are suppressed, and it is possible to control the shape of the cutting chips. The first corner cutting edge 154 and the second corner cutting edge 155 may alternatively be made straight lines.

As shown in FIG. 3 and FIG. 4(a), land parts 160 are formed along the cutting edge 150 in the rake face 120. That is, the land parts 161 to 65 are formed so as to correspond to the cutting edges 151 to 155 respectively, as shown in FIG. 5. Specifically, the main cutting edge land part 161 which is a land part located so as to correspond to the main cutting edge 151, the flat cutting edge land part 162 which is a land part located so as to correspond to the flat cutting part 152, the sub-cutting edge land part 163 which is a land part located so as to correspond to the sub-cutting edge 153, the first corner cutting edge land part 164 which is a land part located so as to correspond to the first corner cutting edge 154, and the second corner cutting edge land part 165 which is a land part located so as to correspond to the second corner cutting edge 155, are formed. With regard to the widths of each of the land parts 161 to 165, from the standpoint of controlling the size (thickness) of the cutting chips generated from each of the cutting edges 151 to 155, it is preferable that the proportionality between the width of the main cutting edge land part 161 and the width of the sub-cutting edge land part 163 be set to be 1:0.7 to 1:1.3, and the proportionality between the width of the main cutting edge land part 161 and the width of the sub-cutting edge land part 163 may be substantially the same (approximately 1:1).

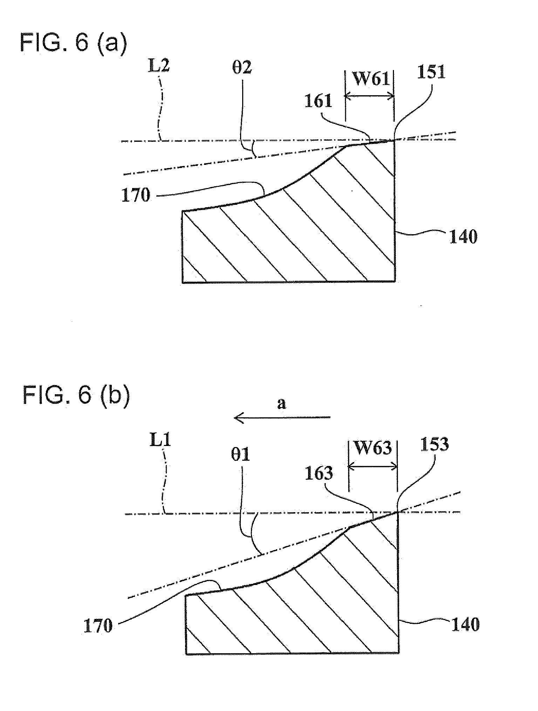

In the present embodiment, as shown in FIG. 6, the relationship between the width W61 of the main cutting edge land part 161 and the width W63 of the sub-cutting edge land part 163 is W61=W63. The widths of the land parts 161 to 65 are more preferably substantially the same. As shown in FIG. 6(b), the sub-cutting edge land part 163 inclines downward as moving toward the center part of the rake face 120 in the direction indicated by the arrow a and, because it is possible to reduce the cutting resistance when cutting and to reduce the back force when cutting, it is possible to suppress vibration when cutting and obtain a good finished surface.

Also, in the present embodiment, as will be described later, the sub-cutting edge land part 163 is formed to have an angle of inclination θ1. The remaining land parts 161, 162, 164, and 165 other than the sub-cutting edge land part 163 may be flat or may be inclined either downward or upward.

Although from standpoint of reducing the cutting resistance the larger is the angle of inclination θ2 of the main cutting edge land part 161 downward moving toward the center part of the rake face 120, as shown in FIG. 6(a), the more preferable it is, from the standpoint of reinforcement of the main cutting edge 151, the angle of inclination is preferably small, and adjustment is made to achieve a balance.

The sub-cutting edge land part 163 is preferably formed so that the angle of inclination is greater than the main cutting edge land part 161, and it is possible to achieve a good balance between the cutting forces of the main cutting edge 151 and the sub-cutting edge 153, enabling the suppression of the occurrence of vibration (chatter) during cutting. Specifically, as shown in FIG. 6, if the angle of inclination of the sub-cutting edge land part 163 referenced to the line L1 passing through the sub-cutting edge 153 and perpendicular to the center axis (not shown) of the insert 100 is θ1, and the angle of inclination of the main cutting edge land part 161 referenced to the line L2 passing through the main cutting edge 151 and perpendicular to the center axis of the insert 100 is θ2, θ1 and θ2 have the relationship θ1>θ2. The difference between θ1 and θ2 is preferably 3° to 10°.

The main cutting edge land part 161 and the sub-cutting edge land part 163 are connected by the first corner cutting edge land part 164. The angle of inclination of the first corner cutting edge land part 164 referenced to the line L3 (not shown) passing through the first corner cutting edge 154 and perpendicular to the center axis of the insert 100 is formed so as to become smaller as moving from the sub-cutting edge land part 163 toward the main cutting edge land part 161. Due to this, stable ejection is possible, without irregular deformation or splitting of the cutting chips. Specifically, when seen in cross-section, the first corner cutting edge land part 164 is formed so as to rise upward as moving from the sub-cutting edge land part 163 toward the main cutting edge land part 161.

The formation of 0.05 to 0.09 mm of honing on the main cutting edge 150 as seen from the rake face side is preferable from the standpoints of suppressing chipping of the cutting tool 150 and enhancing the surface quality of the cut surface (making it smooth). In this case, by making the honing smaller in the sequence of main cutting edge 151, sub-cutting edge 153, and flat cutting edge 152, when roughing gray cast iron, even at the main cutting edge 151 that cuts the altered layer (so-called casting surface) existing on the surface of the gray cast iron, there is no breakage, and it is also possible to enhance the surface quality of the cut surface by the flat cutting edge 152 that forms the cut surface. The preferable ranges of honing for each of the cutting edges as seen from the rake face side are 0.04 to 0.13 mm and particularly 0.06 to 0.09 mm, for the main cutting edge 151, 0.03 to 0.12 mm and particularly 0.05 to 0.07 mm for the sub-cutting edge 153, and 0.02 to 0.09 mm and particularly 0.03 to 0.05 mm for the flat cutting edge 152.

The material for constituting the above-described insert is constituted such that the coated layers having a total thickness of 9 to 25 µm is formed on the surface of the cemented carbide substrate and, the same as the first embodiment, this constitution has, from the substrate side, a TiCN layer, an Al₂O₃ layer, and a surface layer of Ti(CₓN_{y}O_{z})ₐ (x+y+z=1, 0 ≦ x ≦ 0.6, 0 ≦ y ≦ 0.6, 0.2 ≦ z ≦0.8, 1.0 ≦ a ≦ 1.7). Regarding the preferable thicknesses of each layer, the preferable range of thickness of the TiCN layer is 5.0 to 12.0 µm, the preferable range of thickness of the Al₂O₃ is 3.0 to 12.0 µm, and the preferable range of thickness of the surface layer Ti(CₓN_{y}O_{z})ₐ layer is 0.01 to 0.2 µm. The result is that, even in high-speed milling cutting work on gray cast iron, in which there is a tendency for the cutting tool to exhibit thermal cracking and chipping, with the insert of the present invention the occurrence and progression of thermal cracking is slow, and there is good chipping resistance and wear resistance in the coated layer, resulting in a cutting tool with a long life, Because the surface layer Ti(CₓN_{y}O_{z})ₐ layer generates a belag in cutting work on gray cast iron, the coated layer surface exhibits good deposit resistance and good cutting performance. The Al₂O₃ layer is preferably made of α-type crystals.

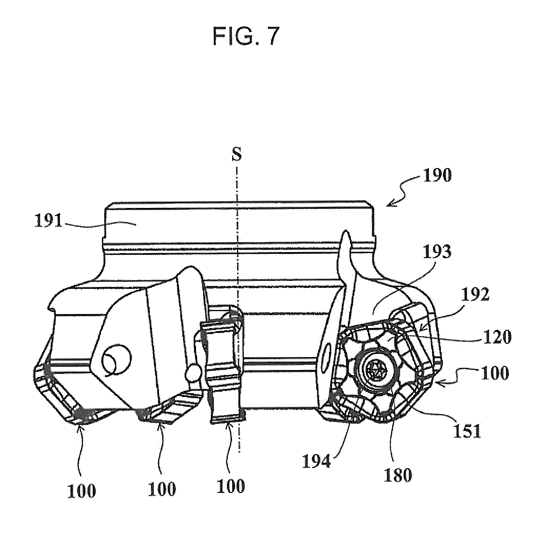

Next, an embodiment in which the above-noted insert is mounted to a holder will be described in detail, with references made to FIG. 7 and FIG. 8. As shown in FIG. 7, a cutting tool 190 (rotating cutting tool) of the present embodiment has a plurality of insert pockets 192 in the outer peripheral end part of the holder 191, and an insert 100 is mounted at each of the peripheral positions in each of the insert pockets 192. Each of the inserts 100 is disposed so that the main cutting edge 151 is positioned on the outermost periphery, with the upper surface (rake face) 120 facing forward in the rotational direction, a mounting screw 194 being inserted into the mounting screw contact part 180 (threaded hole) and screwed into female threads formed in a mounting surface 193 of the holder 191, so as to attach the insert 100 to the holder 191. By rotating the holder 191, cutting is performed by the cutting edges 150 (151 to 155) of the inserts 100.

As shown in the side view of FIG. 8B, the insert 100 is mounted to the holder 191 with a negative axial rake angle y of approximately 6°. The main cutting edge 151 and the sub-cutting edge 153 are inclined downward as moving away from the flat cutting edge 152, and have a positive rake angle with respect to the center axis of rotation S of the holder 191. Alternatively, the main cutting edge 151 and the sub-cutting edge 153 may have a negative axial rake angle rather than a positive rake angle.

### (Method of Manufacturing)

An embodiment of the method of manufacturing the insert of the present embodiment will be described below.

First a metal powder, carbon powder and the like is appropriately added to and mixed with an inorganic powder such as a carbide, nitride, carbonitride, oxide or the like of a metal from which the above-described hard alloy can be made. Then, a prescribed tool shape is formed with a resultant mixture, using a known forming method, such as press forming, casting, extrusion, or cold isostatic pressing. Subsequently, thus an obtained powder compact is sintered in either a vacuum or a non-oxidizing atmosphere to fabricate the above-described substrate 6 made of a hard alloy. The surface of the substrate is then subjected, as desired, polishing and honing of the cutting edge part.

Next, chemical vapor deposition (CVD) is used to form the coated layers on the surface of the obtained substrate 6. First, a TiN layer is formed directly on the substrate as the first layer. The film is grown under coating conditions for the TiN layer that are use of a gas mixture having a composition that incudes 0.5 to 10 vol% of titanium tetracholoride (TiCl₄) gas, and 10 to 60 vol% of nitrogen (N₂) gas, with the remainder being hydrogen (H₂) gas, a film coating temperature of 800 to 940°C (within a chamber), and a pressure of 8 to 50 kPa.

Next, a TiCN layer is formed as the second layer. The coating conditions for the TiCN layer are now described. In this case, the TiCN is constituted by three layers, MT-TiCN layers of a fine columnar crystal layer having a small average crystal width and a coarse columnar crystal layer having a larger average crystal width, and an HT-TiCN layer.

Of the MT-TiCN layers, the fine columnar crystal layer is formed using a gas mixture having a composition that includes 0.5 to 10 vol% of titanium tetrachloride (TiCl₄) gas, 10 to 60 vol% of nitrogen (N₂) gas, and 0.1 to 0.4 vol% of acetonitrile (CH₃CN) gas, with the remainder being hydrogen (H₂) gas, at a coating temperature of 780 to 900°C, and a pressure of 5 to 25 kPa. Of the MT-TiCN layers, the coarse columnar crystal layer is formed using a gas mixture having a composition that includes 0.5 to 4.0 vol% of titanium tetrachloride (TiCl₄) gas, 0 to 40 vol% of nitrogen (N₂) gas, and 0.4 to 2.0 vol% of acetonitrile (CH₃CN) gas, with the remainder being hydrogen (H₂) gas, at a coating temperature of 780 to 900°C, and a pressure of 5 to 25 kPa.

The HT-TiCN layer is formed using a gas mixture having a composition that includes 0.1 to 3 vol% of titanium tetrachloride (TiCl₄) gas, 0.1 to 10 vol% of methane (CH₄) gas, and 0 to 15 vol% of nitrogen (N₂) gas, with the remainder being hydrogen (H₂) gas, at a coating temperature of 950 to 1100°C, and a pressure of 5 to 40 kPa. Then, with the coating temperature at 950 to 1100°C and the pressure at 5 to 40 kPa in the chamber, a gas mixture adjusted to include 1 to 5 vol% of titanium tetrachloride (TiCl₄) gas, 4 to 10 vol% of methane (CH₄) gas, 10 to 30 vol% of nitrogen (N₂) gas, and 4 to 8 vol% of carbon monoxide (CO) gas, with the remainder being hydrogen (H₂) gas, is introduced into the reaction chamber to deposit for 10 to 60 minutes, after which a gas mixture adjusted to include 0.5 to 4.0 vol% of carbon dioxide (CO₂), with the remainder being nitrogen (N₂) gas is introduced into the reaction chamber, and then, at a coating temperature of 950 to 1100°C and a pressure of 40 kPa, a gas mixture of 0.5 to 10 vol% of carbon dioxide (CO₂) gas, with the remainder being nitrogen (N₂) gas is introduced into the reaction chamber for 10 to 60 minutes to oxidize the HT-TiCN layer, changing it to a TiCNO layer as it forms the intermediate layer. Although it is possible to form the intermediate layer without going through the step of causing the flow of the gas mixture that include CO₂ gas, in order to achieve fine crystals that constitute the α-type Al₂O₃ layer, it is preferable to go through the step of causing the flow of the gas mixture that includes CO₂ gas.

Subsequently, a gas mixture adjusted to be 0.3 to 4.0 viol% of carbon dioxide (CO₂) gas, with the remainder being nitrogen (N₂) gas, is introduced into the reaction chamber, and by introducing this for 5 to 30 minutes at a coating temperature of 1000 to 1100°C and a pressure of 5 to 40 kPa, the surface roughness of the coated layer surface is roughened. Continuing, the α-type Al₂O₃ layer is formed. It is preferable that as the coating conditions for the α-type Al₂O₃ layer, a gas mixture of 0.5 to 5 viol% of aluminum trichloride (AlCl₃) gas, 0.5 to 3.5 viol% of hydrogen chloride (HCl) gas, 0.5 to 5.0 viol% of carbon dioxide (CO₂) gas, and 0 to 0.5 viol% of hydrogen sulfide (H₂S) gas, with the remainder being hydrogen (H₂) gas, be introduced into the chamber, and the layer be formed at a coating temperature of 950 to 1100°C, and a pressure of 5 to 10 kPa.

Furthermore, an outermost layer is formed on the α-type Al₂O₃ layer as an upper layer. A gas mixture of 1 to 10 vol% of titanium tetrachloride (TiCl₄) gas, 4 to 10 vol% of methane (CH₄) gas, and 0 to 60 vol% of nitrogen (N₂) gas, the remainder being hydrogen (H₂) gas, is introduced into the reaction chamber and, at a chamber temperature of 960 to 1100°C and pressure of 10 to 85 kPa, the film thickness is adjusted by coating for 1 to 10 minutes, followed by a gas mixture of 0.5 to 4.0 vol% of carbon dioxide (CO₂) gas, with the remainder being nitrogen (N₂) gas being adjusted and introduced into the reaction chamber for 5 to 30 minutes, at a coating temperature of 950 to 1100°C and pressure of 5 to 40 kPa, so as to oxidize the HT-TiCN layer to change the HT-TiCN layer to a TiCNO layer while depositing the outermost layer. The ratio of oxygen with respect to Ti is adjusted by the concentration of the carbon dioxide (CO₂) gas and the oxidation time.

Then, if desired, at least the cutting edge part of the obtained coated layer, and desirably the cutting edge part and rake face of the surface of the obtained coated layer are polished. This polishing makes the cutting edge part and the rake face smooth, resulting in a cutting tool that suppresses deposition of the cut material and that has good chipping resistance.

### Example 1

A 6 wt% of metallic cobalt (Co) powder having an average grain diameter of 1.2 µm was added to tungsten carbide (WC) powder having an average grain diameter of 1.5 µm and mixed, and the shape of a cutting tool (CNMG 120412) is formed by pressing. The thus obtained powder compact was subjected to debindering, and was sintered in a vacuum of 0.5 to 100 Pa for one hour at a temperature of 1400°C to form a cemented carbide. Additionally, the resultant cemented carbide was subjected to cutting edge processing (R honing) of the rake face side by brushing.

Next, using CVD method, various coated layers were formed on the above-noted cemented carbide so as to have the layer structures shown in Table 2, under the coating conditions shown in Table 1. The surface of the coated layers was brushed from the rake face side for 30 seconds to fabricate the surface-coated cutting tool samples I-1 to I-8.

Regarding the thus-obtained tools were observed using a scanning electron microscope, and estimates were made of the shapes and average grain diameter (or average crystal width) of the crystals constituting each layer, and the thicknesses of each of the layers. The results are shown Table 2.

**[Table 1]**

| Condition | Gas mixture composition (vol %) | Chamber temperature (°C) | Pressure (kPa) |
|---|---|---|---|
| (1) | TiCl₄:2.0,N₂:33,H₂:remainder | 880 | 16 |
| (2) | TiCl₄:2.5,N₂:23,CH₃CN:0.4,H₂:remainder | 865 | 9 |
| (3) | TiCl₄:2.5,N₂:10,CH₃CN:0.9,H₂:remainder | 865 | 9 |
| (4) | TiCl₄:3.5,N₂:20,CH₄:7,H₂:remainder | 1,010 | 20 |
| (5) | TiCl₄:3.0,N₂:20,CH₄:7,CO-5.0,H₂:remainder | 1,010 | 15 |
| (6) | CO₂:2.0,N₂:remainder | 1,010 | 9 |
| (7) | CO₂:0.5,N2:remainder | 1,010 | 9 |
| (8) | AlCl₃:2.2 H₂:remainder | 1,005 | 9 |
| (9) | AlCl₃:1.5,HCl:2,CO₂:4,H₂S:0.3,H₂:remainder | 1,005 | 9 |
| (10) | TiCl₄:3.5,N₂:20,CH₄:7,H₂:remainder | 1,010 | 30 |
| (11) | TiCl₄:3.0,CH₄:7,H₂:remainder | 1,010 | 30 |
| (12) | CO₂:2.0,N₂:remainder | 1,010 | 30 |
| (13) | TiCl₄:1.5,CO₂:4,5,H₂:remainder | 1,010 | 30 |
| (14) | TiCl₄:3.5,N₂:20,CH₄:7,CO₂:6,H₂:remainder | 1,010 | 30 |

**[Table 2]**

| Sample No. | Coated Layer¹⁾ | | | | | |
|---|---|---|---|---|---|---|
| | Underlayer | | | | Upperlayer²⁾ | Outermost Layer |
| | First Layer | Second Layer | Third Layer | Fourth Layer | | |
| I-1 | (1) TiN (0.5) (Granular: 0.05) | (2) TiCN (6.5) (Columnar: 0.4) | (3) TiCN (5.0) (Columnar: 0.7) | (4)(5)(6) TiCNO (0.3) (Granular: ---) | (8)(9) Al₂O₃ (α) (4.0) (Columnar: 0.5) | (10)(12) Ti(C_{0.4}N_{0.4}O_{0.2})_{1.3} (0.02) (Granular: ---) |
| I-2 | (1) TiN (0.6) (Granular: 0.05) | (3) TiCN (9.0) (Columnar: 0.6) | (4)(5)(6) TiCNO (0.2) (Granular: ---) | --- | (8)(9) Al₂O₃ (α) (4.0) (Columnar: 0.6) | (10)(12)Ti(C_{0.2}N_{0.3}O_{0.5})₁₅ (0.08) (Granular:---) |
| I-3 | (1) TiN (0.4) (Granular: 0.05) | (2) TiCN (4.0) (Columnar: 0.35) | (3) TiCN (5.0) (Columnar: 0.8) | (4)(5)(7) TiCNO (0.2) (Granular: ---) | (8)(9) Al₂O₃ (α) (4.5) (Columnar: 1.1) | (11)(12) Ti(N_{0.6}O_{0.4})₁ (0,05) (Granular: ---) |
| I-4 | (1) TiN (0.7) (Granular: 0.05) | (3) TiCN (11.0) (Columnar: 0.65) | (4)(5)(6) TiCNO (0.4) (Granular: ---) | --- | (8)(9) Al₂O₃ (α) (3.4) (Columnar: 0.4) | (11)(12) Ti(C_{0.2}O_{0.8})_{1.7} (0.1) (Granular: ---) |
| 1-5 | (1) TiN (0.3) (Granular: 0.05) | (2) TiCN (5.5) (Columnar: 0.4) | (3) TiCN (5.0) (Columnar: 0.8) | (4)(6) TiCNO (0.2) (Granular: ---) | (8)(9)Al2O₃(α) (3.2) (Columnar: 0.5) | (14) Ti(C_{0.1}N_{0.1}O_{0.8})_{1.2} (2.0) (Granular: 1.0) |
| I-6 | (3) TiCN (10.0) (Columnar: 0.6) | (4)(6) TiCNO (0.2) (Granular: ---) | --- | --- | (8)(9) Al₂O₃ (α) (2.0) (Columnar: 0.4) | (13)TiO_{1.5} (0.5) (Granular: ---) |
| 1-7 | (1)TiN (0.6) (Granular: 0.05) | (2) TiCN (6.0) (Columnar: 0.4) | (3) TiCN (3.0) (Columnar: 0.7) | (6) TiCNO (0.4) (Granular: ---) | (8)(9) Al₂O₃ (α) (2.5) (Columnar: 0.4) | --- |

| | | | | | | |
|---|---|---|---|---|---|---|
| 1) (1) to (14): Coating conditions, (film thickness (µm)), [crystal form, average crystal width (µm)] 2) For the Al₂O₃ layer, the type of crystal is indicated in parentheses. | | | | | | |

Next, a cutting test was performed using these inserts, under the following cutting conditions. The results are shown in Table 3.
Cutting method: End face cutting
Work: FC250
Cutting speed: 450 m/minute
Feed rate: 0.35 mm/revolution
Depth of cut: 3.0 mm
Cutting condition: Dry
Evaluation method: Time for flank wear to exceed 0.3 mm (noted as the tool life in the table) and the cutting edge condition at that time.

**[Table 3]**

| Sample No | Coated layer Surface roughness (Ra) (µm) | Coated layer thickness/surface roughness (Ra) | Life (min) | Cutting edge condition |
|---|---|---|---|---|
| I- 1 | 0.1 | 0.2 | 30 | Good |
| I- 2 | 0.3 | 0.27 | 35 | Good |
| I- 3 | 0.5 | 0.1 | 27 | Good |
| I- 4 | 0.3 | 0.33 | 29 | Good |
| I- 5 | 0.2 | 10 | 13 | Chipping |
| I- 6 | 0.1 | 5 | 15 | Chipping |
| I- 7 | 0.2 | --- | 17 | Little Belag formation |

From the results shown in Tables 1 to 3, in sample I-5, which has an outermost layer that is thicker than the surface roughness of the coated layers, and in sample I-6, which has a TiO₂ layer as the outermost layer, the outermost layer peeled quickly, and there was not much effect of the generation of a belag. Also, even in sample 1-7, which has an Al₂O₃ layer as the outermost layer, there were a lot of deposition, and the life of the tool was short. In contrast, samples I-1 to I-4, which are within the scope of the present invention, had a tendency to improve the wear resistance by the effect of the generation of a belag.

### Example 2

To tungsten carbide (WC) powder having an average grain diameter of 1.0 µm as the main component, 8.5 wt% of metallic cobalt (Co) powder having an average grain diameter of 1.2 µm, 0.8 wt% of tantalum carbide (TaC) powder having an average grain diameter of 1.1 µm, and 0.1 wt% of niobium carbide (NbC) powder having an average grain diameter of 1.0 µm are added and mixed, and formed by pressing into the shape of the insert shown in FIG. 3 to FIG. 6 (type number PNMU 1205ANER-GM), followed by debindering and manufacturing of an cemented carbide by sintering for one hour in a vacuum of 0.01 Pa at a temperature of 1450°C. The surface of the rake face of each sample was polished by blasting and brushing. Additionally, the manufactured cemented carbide was subjected to cutting edge processing (honing) by brushing to the sizes noted in Table 4. The honing was measured at the rake face by the method of using a projector.

Next, using CVD, various coated layers were formed on the above-noted cemented carbide so as to have the layer structures shown in Table 5, under the coating conditions shown in Table 4. The surface of the coated layer was brushed from the rake face side for 30 seconds to fabricate the surface-coated cutting tool samples II-1 to II-8.

The obtained tools were observed using a scanning electron microscope and estimates were made of the shapes and average grain diameter (or average crystal width) of the crystals constituting each layer, and the thicknesses of each of the layers. The results are shown Table 5.

**[Table 4]**

| Condition | Gas mixture composition (vol %) | Chamber temperature (°C) | Pressure (kPa) | Time (minutes) |
|---|---|---|---|---|
| (1) | TiCl₄:2.0,N₂:33,H₂: remainder | 880 | 16 | Variable |
| (2) | TiCl₄:2.5,N₂:23,CH₃CN:0.4,H₂: remainder | 865 | 9 | Variable |
| (3) | TiCl₄:2.5,N₂:10,CH₃CN:0.9,H₂: remainder | 865 | 9 | Variable |
| (4) | TiCl₄:3.5,N₂:20,CH₄:7,H₂: remainder | 1,010 | 20 | 30 |
| (5) | TiCl₄-3.0,N₂:20,CH₄:7,CO:5.0,H₂: remainder | 1,010 | 15 | 24 |
| (6) | CO₂:2.0,N₂: remainder | 1,010 | 9 | 40 |
| (7) | CO₂-0.5,N₂: remainder | 1,010 | 9 | 5 |
| (8) | AlC₃:2.2 H₂: remainder | 1,005 | 9 | Variable |
| (9) | AlCl₃:1.5,HCl:2,CO₂:4,H₂S:0.3,H₂: remainder | 1,005 | 9 | Variable |
| (10) | TiCl₄:3.5,N₂:20,CH₄:7,H₂: remainder | 1,010 | 30 | Variable |
| (11) | TiCl₄:3.0,CH₄:7,H₂: remainder | 1,010 | 30 | Variable |
| (12) | CO₂:2.0,N₂: remainder | 1,010 | 30 | Variable |
| (13) | TiCl₄:1.5,CO₂:4.5,H₂: remainder | 1,010 | 30 | Variable |
| (14) | TiCl₄:3.5,N₂:20,CH₄:7,CO₂:6,H₂: remainder | 1,010 | 30 | Variable |

**[Table 5]**

| Sample | Coated Layer¹⁾ | | | | | | Film Thickness (µm) |
|---|---|---|---|---|---|---|---|
| | Underlayer | | | | Upper layer | Outermost Layer | |
| | First Layer | Second Layer | Third Layer | Fourth Layer | | | |
| II-1 | (1) TiN (0.5) (Granular:0.05) | (2) TiCN (6.5) (Columnar: 0.4) | (3) TiCN (2.0) (Columnar: 0.7) | (4)(5)(6)TiCNO (0.3) (Granular: ---) | (8)(9)Al₂O₃ (α) (6.0) (Columnar: 0.5) | (10)(12) Ti(C_{0.4}N_{0.4}O_{0.2})_{1.3} (0.03) (Granular:---) | 15.33 |
| II-2 | (1) TiN (0,5) (Granular:0.05) | (3) TiCN (7.8) (Columnar: 0.6) | (4)(5)(6) TiCNO (0.2) (Granular: ---) | --- | (8)(9) Al₂O₃ (α) (3.1) (Columnar: 0.6) | (10)(12) Ti(C_{0.2}N_{0.3}O_{0.5})_{1.5} (0.07) (Granular: ---) | 11.67 |
| II-3 | (1) TiN (0.4) (Granular:0.05) | (2)TiCN (4.0) (Columnar: 0.35) | (3)TiCN (5.0) (Columnar: 0.8) | (4)(5)(7)TiCNO (0.2) (Granular: ---) | (8)(9)Al₂O₃ (α) (10.5) (columnar: 1.1) | 11)(12) Ti(N_{0.6}O_{0.4})₁ (0.05) (Granular: ---) | 20.15 |
| II-4 | (1) TiN (0.6) (Granular:0.05) | (3)TiCN (6.0) (Columnar 0.65) | (4)(5)(6) TiCNO (0.4) (Granular: ---) | --- | (8)(9) Al₂O₃ (α) (8.4) (Columnar: 0.4) | (11)(12) Ti(C_{0.2}O_{0.8})_{1.7} (0.02) (Granular: ---) | 15.42 |
| 11-5 | (1)TiN (0.3) (Granular:0.05) | (2) TiCN (5.5) (Columnar: 0.4) | (3) TiCN (1.0) (columnar: 0.8) | (4)(6) TiCNO (0.2) (Granular: ---) | (8)(9)Al₂O₃(α) (5.2) (Columnar: 0.5) | (14)TiN (2.0) (Granular: 1.0) | 14.2 |
| II-6 | (3) TiCN (3.0) (Columnar:0.6) | (4)(6) TiCNO (0.2) (Granular: ---) | --- | --- | (8)(9) Al₂O₃ (α) (3.7) (Columnar: 0.4) | (11)(12) Ti(C_{0.2}O_{0.8})_{1.7} (0.07) (Granular: ---) | 6.97 |
| II-7 | (1)TiN (0.6) (Granular:0.05) | (2)TiCN (6.0) (Columnar: 0.4) | (3)TiCN (3.0) (Columnar: 0.7) | (6) TiCNO (0.4) (Granular: ---) | (8)(9)Al₂O₃ (α) (2.5) (Columnar: 0.4) | --- | 12.5 |
| II-8 | (1)TiN (0.5) (Granular:0.05) | (2) TiCN (6.5) (Columnar: 0.4) | (3) TiCN (2.0) Columnar: 0.7 | (4)(5)(6) TiCNO (4)(5) (0.3) (Granular: ---) | (8)(9)Al₂O₃ (α) (6.0) (Columnar: 0.5) | (10)(13) 0.8 Ti(C0.8O_{0.2})_{0.8} (0.03) (Granular: ---) | 15.33 |

| | | | | | | | |
|---|---|---|---|---|---|---|---|
| 1) Coated layer (1) to (14): Coating conditions (film thickness (µm)), [crystal form, average crystal width (µm)] 2) For the Al₂O₃ layer, the type of crystal is indicated in parentheses | | | | | | | |

Then, an intermittent cutting test was performed using these cutting tools under the following conditions to evaluate the chipping resistance. The results are shown in Table 6.

| Evaluation method: | Surface milling |
|---|---|
| Work: | FC250 (four holes) |
| Cutting speed: | 300 m/minute |
| Depth of cut: | 1.5 mm |
| Feeding rate: | 0.3 mm/tooth |
| Cutting condition: | Dry |

**[Table 6]**

| Sample No | Surface roughness (µm) | Cutting edge horning R | | | Life (min) | Main cutting edge condition | Work Cut surface |
|---|---|---|---|---|---|---|---|
| | | Main cutting edge (mm) | Sub-cutting edge (mm) | Flat cutting edge (mm) | | | |
| II- 1 | 0.5 | 0.07 | 0.06 | 0.04 | 115 | Good | Good |
| II-2 | 0.1 | 0.08 | 0.06 | 0.03 | 103 | Good | Good |
| II- 3 | 0.5 | 0.05 | 0.03 | 0.02 | 98 | Good | Good |
| II-4 | 0.4 | 0.13 | 0.08 | 0.07 | 112 | Good | Good |
| II-5 | 0.8 | 0.05 | 0.08 | 0.08 | 35 | Chipping | Rough |
| II-6 | 0.07 | 0.06 | 0.06 | 0.06 | 63 | Thermal cracking | Clouded |
| II-7 | 0.4 | 0.06 | 0.06 | 0.06 | 86 | Creation of small belag | Clouded |
| II-8 | 0.5 | 0.08 | 0.08 | 0.1 | 80 | Deposit | Rough |

From the results shown in Tables 4 to 6, in sample II-5, which has an outermost layer that is made of a TiN layer, chipping of the outermost layer occurs quickly, in sample II-6, in which the thickness of the outermost layer is the same as the surface roughness of the coated layer, chipping occurs due to thermal cracking, in even sample II-7, which has an outermost layer that is made of Al₂O₃, there is severe deposition and a short tool life, and in sample II-8, in which the value of a in the Ti(CₓN_{y}O_{z})ₐ layer of the outermost layer is smaller than 1, flaking occurs quickly in the outermost layer, and there was not much effect observed of the generation of belag.

In contrast, samples II-1 to II-4, which are within the scope of the present invention, had a high wear resistance of the coated layer, and also had a tendency to provide a further improvement in the wear resistance, due to the effect of the generation of belag.

### Reference Symbols

- 1,100: Insert
- 2: rake face
- 2a: rake face uppermost surface part
- 3: flank face
- 3a: flank face center part
- 4: Cutting edge
- 6: Substrate
- 7: TiN layer
- 8, 9: MT-TiCN layer
- 10: HT-TiCN layer
- 11: Intermediate layer
- 12: Al₂O₃ layer
- 14: Outermost layer
- 100: Insert
- 120: Upper surface functioning as a rake face
- 130: Lower surface functioning as a seating surface
- 140: Side surface functioning as a flank face
- 150: Cutting edge
- 151: Main cutting edge
- 152: Flat cutting edge
- 153: Sub-cutting edge
- 154: First corner cutting edge
- 155: Second corner cutting edge
- α: Outer peripheral cutting edge angle of the main cutting edge 151
- β: Outer peripheral cutting edge angle of the sub-cutting edge 153
- 160: Land part
- 161: Main cutting edge land part
- 162: Flat cutting edge land part
- 163: Sub-cutting edge land part
- 164: First corner cutting edge land part
- 165: Second corner cutting edge land part
- L1: Line passing through the sub-cutting edge 153 and perpendicular to the center axis of the insert 100
- L2: Line passing through the main cutting edge 151 and perpendicular to the center axis of the insert 100
- θ1: Angle of inclination of the sub-cutting edge land part 163
- θ2: Angle of inclination of the main cutting edge land part 161
- 170: Breaker groove
- 180: Mounting screw contact part
- 190: Cutting tool (rotary tool)
- 191: Holder
- 192: Insert pocket
- 193: Mounting surface
- 194: Mounting screw

## Claims

1. A cutting tool comprising multiple coated layers formed on a surface of a substrate, wherein
an outermost layer of the coated layers is made of a Ti(CₓN_{y}O_{z})ₐ (x+y+z=1, 0 ≦ x ≦ 0.6, 0 ≦ y ≦ 0.6, 0.2 ≦ z ≦ 0.8, 1.0 ≦ a ≦ 1.7) layer, and
a thickness of the outermost layer in a center part of a flank face is smaller than a surface roughness (Ra) of the outermost layer.

2. The cutting tool according to claim 1, wherein the thickness of the outermost layer in the center part of the flank face is 0.01 to 0.1 µm, and the surface roughness (Ra) is 0.1 to 0.5 µm.

3. The cutting tool according to claim 2, wherein the surface roughness (Ra) of the outermost layer in the center part of the flank face is coarser than the surface roughness (Ra) of the outermost layer of a rake face.

4. The cutting tool according to any one of claims 1 to 3, wherein the thickness of the outermost layer in a cutting edge tip is thinner than the thickness of the outermost layer in the center part of the flank face, or the outermost layer does not exist at the cutting edge tip.

5. The cutting tool according to any one of claims 1 to 4 that is a negative type, wherein
the coated layers are formed on the surface of the cemented carbide substrate, the coated layers having a total thickness of 9 to 25 µm, and comprising, from the substrate side:
a TiCN layer;
an Al₂O₃ layer; and
a surface layer of Ti(CₓN_{y}O_{z})ₐ (x+y+z=1, 0 ≦ x ≦ 0.6, 0 ≦ y ≦ 0.6, 0.2 ≦ z ≦ 0.8, 1.0 ≦ a ≦ 1.7),
cutting edges formed at the edges formed by intersections of the upper surface and the side surface are a plurality of sets, each set comprising a main cutting edge, a sub-cutting edge and a flat cutting edge,
land parts are formed at positions on the rake face that follow the cutting edges,and
a sub-cutting edge land part that follows the sub-cutting edge is inclined so as to approach the lower surface as moving toward the center part of the upper surface.

6. The cutting tool according to claim 5, wherein honing of 0.05 to 0.09 mm, as seen from the rake face side, is formed on the cutting edge.

7. The cutting tool according to claim 6, wherein the honing becomes smaller in the sequence of a main cutting edge, a sub-cutting edge, and a flat cutting edge.

8. The cutting tool according to any one of claims 5 to 7, wherein a main cutting edge land part is inclined so as to approach the lower surface thereof as moving toward to the center part of the upper surface, and the angle of inclination of the sub-cutting edge land part is larger than the angle of inclination of a main cutting edge land part corresponding to the main cutting edge.

9. The cutting tool according to claim 8, wherein the angular difference between the angle of inclination of the main cutting edge land part and the angle of inclination of the sub-cutting edge land part is 3 to 10°.

10. The cutting tool according to any one of claims 5 to 9, wherein the flat cutting edge is formed to protrude more than the main cutting edge, and the sub-cutting edge is inclined so as to approach the lower surface thereof as moving from the flat cutting edge toward the main cutting edge.

11. The cutting tool according to any one of claims 5 to 10, further comprising:
a curved first corner cutting edge between the main cutting edge and the sub-cutting edge, and
a curved second corner cutting edge between the sub-cutting edge and the flat cutting edge.

12. The cutting tool according to claim 11, wherein, when seen in plan view, a radius of curvature of the first corner cutting edge is larger than the radius of curvature of the second corner cutting edge.
